# EUROPEAN PATENT APPLICATION

(11) **EP 4 682 954 A1**
(43) Date of publication of application: **21.01.2026**
(21) Application number: 25189535.5
(22) Date of filing: 15.07.2025
(51) Int. Cl.: H01L 23/528, H10D 89/10, G06F 30/39

(54) **INTEGRATED CIRCUIT USING MULTIPLE SUPPLY VOLTAGE AND METHOD OF DESIGNING THE SAME**

(30) Priority: 16.07.2024 KR 20240094014; 29.11.2024 KR 20240175821
(71) Applicant: Samsung Electronics Co., Ltd., Suwon-si, Gyeonggi-do 16677 (KR)
(72) Inventor: LIU, Jianfeng, 16677 Suwon-si (KR); HWANG, Eunju, 16677 Suwon-si (KR); CHU, Donghyung, 16677 Suwon-si (KR)
(74) Representative: Marks & Clerk LLP

(57) **Abstract**

An integrated circuit comprising: a plurality of devices arranged on a front side of a substrate; a first backside pattern and a second backside pattern, wherein the first backside pattern and the second backside pattern extend in a first direction along a first track in a first backside wiring layer, wherein the first backside wiring layer is on a back side of the substrate, and wherein the first backside pattern and the second backside pattern are configured to receive a first supply voltage and provide the first supply voltage to at least one of the plurality of devices; and a third backside pattern extending in the first direction along the first track between the first backside pattern and the second backside pattern, in the first backside wiring layer, wherein the third backside pattern is configured to receive a source supply voltage and provide the source supply voltage to a first device of the plurality of devices.

## Description

### BACKGROUND

Integrated circuits may use various supply voltages. For example, an integrated circuit may include not only devices which use power provided from positive supply voltages and negative supply voltages, but also devices which use power provided from additional source supply voltages. Patterns may include patterns for providing source supply voltages to a plurality of devices as well as patterns for providing positive supply voltages and negative supply voltages.

### SUMMARY

Some aspects of the present disclosure provide integrated circuits including patterns which are efficiently arranged to provide multiple supply voltages, and methods of designing the integrated circuits.

According to some implementations of the present disclosure, there is provided an integrated circuit comprising: a plurality of devices arranged on a front side of a substrate; a first backside pattern and a second backside pattern, wherein the first backside pattern and the second backside pattern extend in a first direction along a first track in a first backside wiring layer, wherein the first backside wiring layer is on a back side of the substrate, and wherein the first backside pattern and the second backside pattern are configured to receive a first supply voltage and provide the first supply voltage to at least one of the plurality of devices; and a third backside pattern extending in the first direction along the first track between the first backside pattern and the second backside pattern, in the first backside wiring layer, wherein the third backside pattern is configured to receive a source supply voltage and provide the source supply voltage to a first device of the plurality of device.

According to some implementations of the present disclosure, there is provided an integrated circuit comprising: a first cell comprising at least one device arranged on a front side of a substrate, wherein the first cell is configured to receive a first supply voltage and a second supply voltage; a second cell comprising at least one device arranged on the front side of the substrate, wherein the second cell is configured to receive a source supply voltage and the second supply voltage; a first backside pattern and a second backside pattern, wherein the first backside pattern and the second backside pattern extend in a first direction along a first track in a first backside wiring layer, wherein the first backside wiring layer is on a back side of the substrate, and wherein the first backside pattern and the second backside pattern are configured to receive the first supply voltage; and a third backside pattern extending in the first direction along the first track between the first backside pattern and the second backside pattern, in the first backside wiring layer, wherein the third backside pattern is configured to receive the source supply voltage..

According to some implementations of the present disclosure, there is provided a method of designing an integrated circuit comprising a plurality of cells, the method comprising: placing a plurality of first cells configured to receive a first supply voltage and a second supply voltage and a plurality of second cells configured to receive a source supply voltage and the second supply voltage, wherein the plurality of first cells and the plurality of second cells are placed in a plurality of rows extending in a first direction; modifying placement of the plurality of first cells and the plurality of second cells such that the plurality of second cells are grouped into at least one island; and arranging a first backside pattern that extends in the first direction and overlaps the at least one island, wherein the first backside pattern is in a first backside wiring layer that is on a back side of a substrate, and wherein the first backside pattern is configured to receive the source supply voltage..

The arranging of the plurality of first cells and the plurality of second cells may include identifying at least one area including a second backside pattern which extends in a second direction that is perpendicular to the first direction, in a second backside wiring layer that is under the first backside wiring layer, and to which the source supply voltage is applied, and arranging the plurality of second cells in the at least one area.

The rearranging of the plurality of first cells and the plurality of second cells may include arranging a complete cell in contact with boundaries extending in a second direction that is perpendicular to the first direction, in the at least one island.

The rearranging of the plurality of first cells and the plurality of second cells may include arranging a trunk cell in the at least one island.

The rearranging of the plurality of first cells and the plurality of second cells may include arranging a border cell in contact with a boundary extending in a second direction that is perpendicular to the first direction, in the at least one island.

The rearranging of the plurality of first cells and the plurality of second cells may include inserting a break cell in contact with a boundary extending in a second direction that is perpendicular to the first direction, in the at least one island.

The rearranging of the plurality of first cells and the plurality of second cells may include inserting a filler cell within the at least one island.

The method may further include arranging a second backside pattern and a third backside pattern which extend in the first direction along the first track in the first backside wiring layer and to which the first supply voltage is applied, wherein the first backside pattern extends in the first direction between the second backside pattern and the third backside pattern.

The method may further include generating layout data defining a layout of the integrated circuit, fabricating a mask based on the layout data, and manufacturing the integrated circuit based on the mask.

Conductive patterns (e.g. backside patterns) that are arranged in the same wiring layer (e.g. the first wiring layer) may overlap each other in a horizontal direction (e.g. a direction parallel to the front side and/or back side of the substate), such as the first direction. The term "overlap in a direction" may refer to two elements that are arranged such that a straight line that runs parallel to the direction can be defined such that is passes through at least a portion of each of the two elements. For instance, two elements that "vertically overlap" each other may be arranged such that a straight line can be defined that runs perpendicular to the front side and/or back side of the substrate and passes through at least a portion of each of the two elements. Conductive patterns (e.g. backside patterns) that are arranged in the same wiring layer (e.g. the first wiring layer) may be arranged at the same vertical height (e.g. the same position along a vertical direction relative to the front side and/or back side of the substrate). A vertical direction may be a direction perpendicular to the front side and/or back side of the substrate.

At least some of the above and other features of the invention are set out in the claims.

### BRIEF DESCRIPTION OF THE DRAWINGS

FIGS. 1A and 1B are diagrams illustrating examples of layouts of an integrated circuit;
FIGS. 2A to 2D are diagrams illustrating examples of devices;
FIGS. 3A and 3B are diagrams illustrating examples of integrated circuits;
FIGS. 4A and 4B are diagrams illustrating examples of layouts of an integrated circuit;
FIG. 5 is a diagram illustrating an example of a layout of an integrated circuit;
FIG. 6 is a diagram illustrating an example of a layout of an integrated circuit;
FIG. 7 is a diagram illustrating an example of a layout of an integrated circuit;
FIG. 8 is a diagram illustrating an example of a layout of an integrated circuit;
FIG. 9 is a flowchart illustrating an example of a method of manufacturing an integrated circuit;
FIG. 10 is a flowchart illustrating an example of a method of designing an integrated circuit;
FIG. 11 is a diagram illustrating an example of a layout of an integrated circuit;
FIG. 12 is a flowchart illustrating an example of a method of designing an integrated;
FIG. 13 is a diagram illustrating an example of a layout of an integrated circuit;
FIG. 14 is a flowchart illustrating an example of a method of designing an integrated circuit;
FIG. 15 is a flowchart illustrating an example of a method of designing an integrated circuit;
FIG. 16 is a diagram illustrating an example of a layout of an integrated circuit;
FIG. 17 is a block diagram illustrating an example of a system-on-chip (SoC); and
FIG 18 is a block diagram illustrating an example of a computing system including a memory for storing programs.

### DETAILED DESCRIPTION

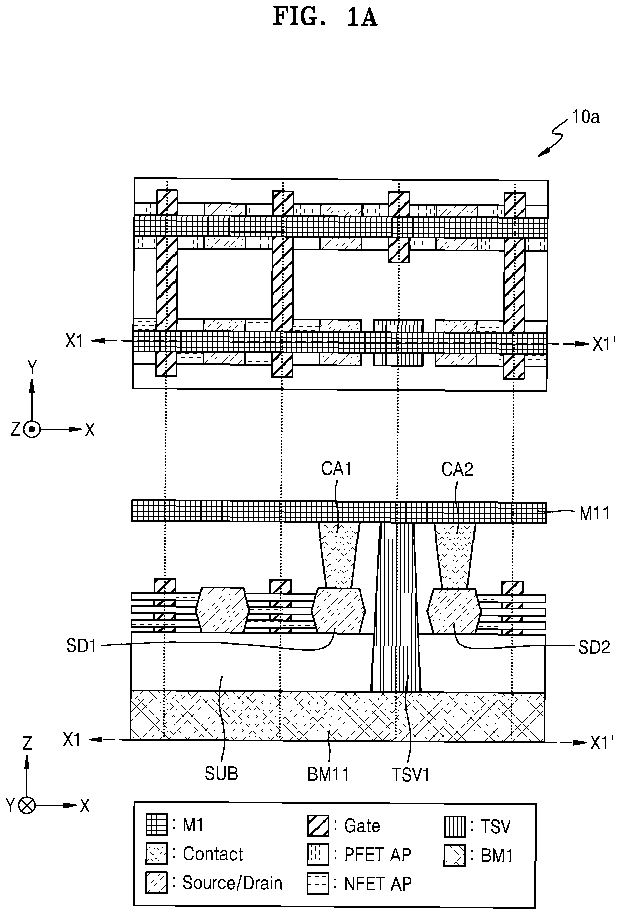

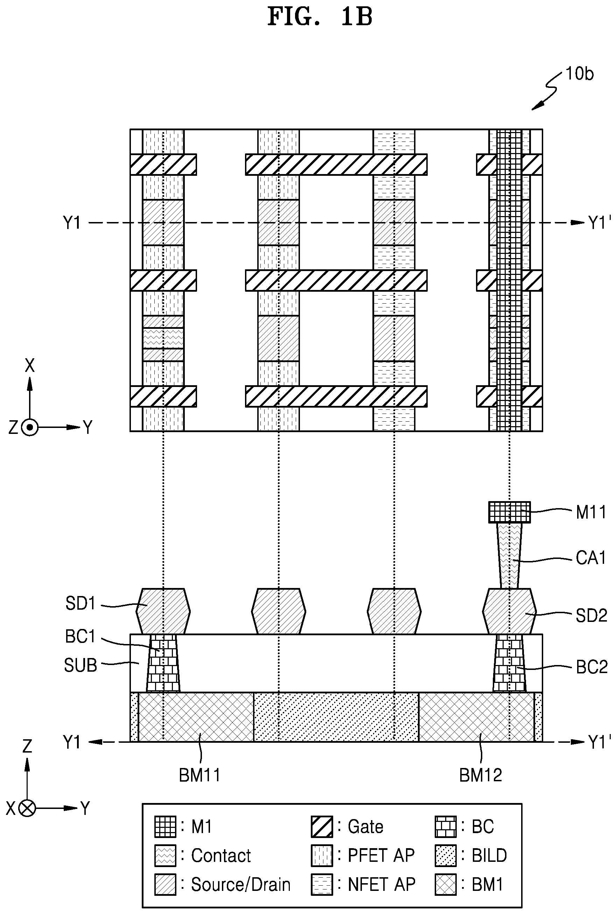

FIGS. 1A and 1B are diagrams illustrating layouts of an integrated circuit. FIG. 1A shows a plan view of a layout 10a and a cross-sectional view of the layout 10a taken along line X1-X1', and FIG. 1B shows a plan view of a layout 10b and a cross-sectional view of the layout 10b taken along line Y1-Y1'.

Herein, the X-axis direction and the Y-axis direction may be referred to as a first direction and a second direction, respectively, and the Z-axis direction may be referred to as a vertical direction or a third direction. A plane including the X-axis and the Y-axis may be referred to as a horizontal surface (or horizontal plane), an element arranged in a relatively +Z direction compared to another element may be referred to as being above the other element, and an element arranged in a relatively -Z direction compared to another element may be referred to as being under the other element. The X-axis direction may be parallel to a substrate (e.g. to the front side and/or back side of the substrate). The Y-axis direction may be parallel to the substrate (e.g. to the front side and/or back side of the substrate). The Z-axis direction may be perpendicular to the substrate (e.g. to the front side and/or back side of the substrate). The X-axis direction may cross (e.g. may be perpendicular to) the Y-axis direction. In addition, an area of an element may refer to a size the element occupies on a plane parallel to the horizontal surface, and a width of an element may refer to a length of a direction orthogonal to a direction in which the element extends. A surface exposed in the +Z direction may be referred to as a top surface, a surface exposed in the -Z direction may be referred to as a bottom surface, and a surface exposed in the ±X direction or the ±Y direction may be referred to as a side surface. It will be appreciated that these relative positions are defined relative to the structure of the device, and need not imply any particular orientation of the device in use. In the drawings of the present specification, for convenience of illustration, only some layers may be illustrated, and vias connecting a top pattern to a bottom pattern may be indicated for understanding even though they are located under the top pattern. In addition, a pattern including a conductive material, such as a pattern of a wiring layer, may be referred to as a conductive pattern or may simply be referred to as a pattern.

As used herein, the singular forms "a", "an", and "the" are intended to include the plural forms as well, unless the context clearly indicates otherwise. Additionally, the description may be specific to a portion of the device and the described structure may be repeated in other portions of the device. For example, the described structure may be an individual element of an array of elements forming the device. Accordingly, where the structure of a single element of a plurality of elements has been described, this structure may equally apply to other elements of the plurality of elements.

The terms "first", "second", third" may be used to describe various elements but the elements are not limited by the terms and a "first element" may be referred to as a "second element". Alternatively or additionally, the terms "first", "second", "third", etc. may be used to distinguish components from each other and do not limit the present disclosure. For example, the terms "first", "second", "third", etc. may not necessarily involve an order or a numerical meaning of any form.

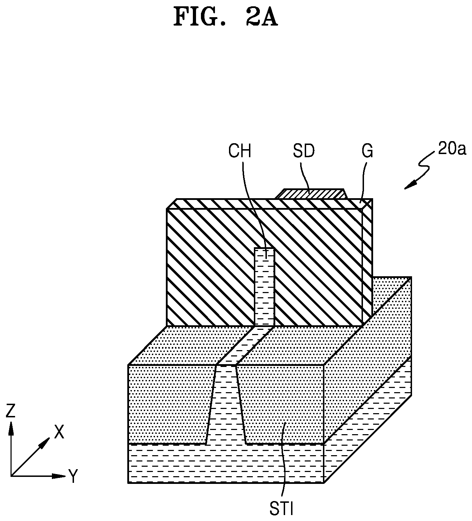

The integrated circuit may include devices arranged above a substrate SUB, for example, transistors. The devices may be on a front side (otherwise known as a first side) of the substrate. Examples of devices arranged above the substrate SUB are described below with reference to FIGS. 2A to 2D. In addition, the integrated circuit may include patterns extending under the substrate SUB (e.g., on a back side (otherwise known as a second side, opposite to the first side) of the substrate) as well as patterns extending above the devices. For example, as shown in FIG. 1A, the layout 10a may not only include patterns (e.g., M11) extending in a first front-side wiring layer M1 above the substrate SUB, but also patterns (e.g., BM11) extending in a first backside wiring layer BM1 under the substrate SUB. In some implementations, the patterns extending under the substrate SUB may be used to supply power to the devices. As described above, the backside patterns used to supply power to the devices may be referred to as a backside power rail or a backside power delivery network (BSPDN). Due to the patterns extending under the substrate SUB, routing resources in the front-side wiring layers may increase, and the integrated circuit may have a reduced area and/or an efficient structure. For example, when the backside patterns are used for power supply, supply voltages which are not dropped or dropped less (e.g., due to reduced IR drop) may be provided to the devices.

Referring to FIG. 1A, the layout 10a may include gates (or gate electrodes) extending in the Y-axis direction and active patterns extending in the X-axis direction. For example, as shown in FIG. 1A, p-channel field effect transistor (PFET) active patterns PFET AP and n-channel field effect transistor (NFET) active patterns NFET AP may extend in the X-axis direction and cross the gates extending in the Y-axis direction. A source and a drain may be formed at opposite sides of the gate, respectively, and a channel may be formed between the source and the drain. A first backside pattern BM11 may extend in the X-axis direction in the first backside wiring layer BM1, and a backside interlayer dielectric BILD may be arranged between backside patterns in the backside wiring layer. In some implementations, the first backside pattern BM11 may provide a negative supply voltage to NFETs.

The layout 10a may include a through silicon via TSV passing through the substrate SUB between a pattern of the backside wiring layer and a pattern of the front-side wiring layer. For example, as shown in FIG. 1A, a first through silicon via TSV1 may extend from the upper surface of the first backside pattern BM11 to the lower surface of the first front-side pattern M11. Accordingly, the first front-side pattern M11 and the first backside pattern BM11 may be (electrically) connected through the first through silicon via TSV1.

The first front-side pattern M11 may be connected to a first source/drain SD1 through a first contact CA1. Accordingly, the first source/drain SD1 of the NFET may receive a negative supply voltage from the first backside pattern BM11 through the first through silicon via TSV1, the first front-side pattern M11, and the first contact CA1. In addition, the first front-side pattern M11 may be connected to a second source/drain SD2 through a second contact CA2. Accordingly, the second source/drain SD2 of the NFET (e.g. of a second NFET) may receive a negative supply voltage from a second backside pattern BM12 through the first through silicon via TSV1, the first front-side pattern M11, and the second contact CA2. In some implementations, a via may be additionally arranged between the first front-side pattern M11 and the first contact CA1 and/or the first front-side pattern M11 and the first through silicon via TSV1.

Referring to FIG. 1B, the layout 10b may include gates extending in the Y-axis direction and active patterns extending in the X-axis direction. For example, as shown in FIG. 1B, the PFET active patterns PFET AP and the NFET active patterns NFET AP may extend in the X-axis direction and cross the gates extending in the Y-axis direction. A source and a drain may be formed at opposite sides of the gate, respectively, and a channel may be formed between the source and the drain. The first backside pattern BM11 and the second backside pattern BM12 may extend in the X-axis direction in the backside wiring layer BM1, and the backside interlayer dielectric BILD may be arranged between the first backside pattern BM11 and the second backside pattern BM12. In some implementations, the first backside pattern BM11 may provide a positive supply voltage to the PFET, and the second backside pattern BM12 may provide a negative supply voltage to the NFET.

The layout 10b may include a backside contact BC passing through the substrate SUB, between the pattern of the backside wiring layer and the source/drain. For example, as shown in FIG. 1B, a first backside contact BC1 may extend from the upper surface of the first backside pattern BM11 to a lower surface of the first source/drain SD1. Accordingly, the first source/drain SD1 of the PFET may receive a positive supply voltage from the first backside pattern BM11 through the first backside contact BC1. In addition, a second backside contact BC2 may extend from an upper surface of the second backside pattern BM12 to a lower surface of the second source/drain SD2. Accordingly, the second source/drain SD2 of the NFET may receive a negative supply voltage from the second backside pattern BM12 through the second backside contact BC2. In some implementations, a via, for example, the through silicon via TSV, may be arranged between the backside contact BC and the first backside wiring layer BM1. As shown in FIG. 1B, the first front-side pattern M11 may be connected to the second source/drain SD2 through the first contact CA1.

The integrated circuit may include not only devices which use power provided from a positive supply voltage and a negative supply voltage, but also devices which use power provided from an additional source supply voltage. Accordingly, in order to supply power to the devices, back side patterns for providing a source supply voltage as well as a positive supply voltage and a negative supply voltage may be provided. As described below with reference to the drawings, in some implementations, backside patterns for providing a positive supply voltage, a negative supply voltage, and a source supply voltage may be efficiently arranged, and devices of the integrated circuit may receive supply voltages not dropped, or less dropped, by IR drop. That is, by efficiently arranging the backside patterns to reduce the length of the current paths, voltage drop may be reduced. In addition, due to the non-dropped or less-dropped supply voltages, the integrated circuit may have high reliability.

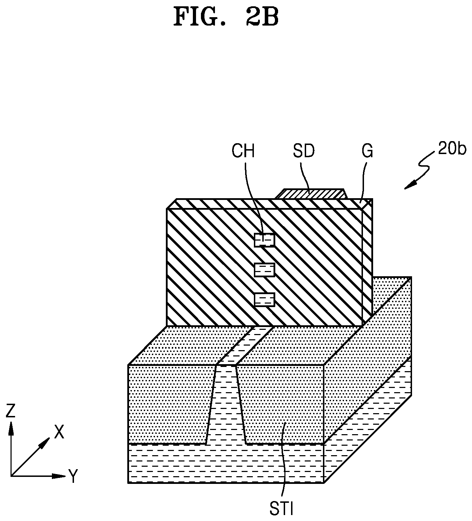

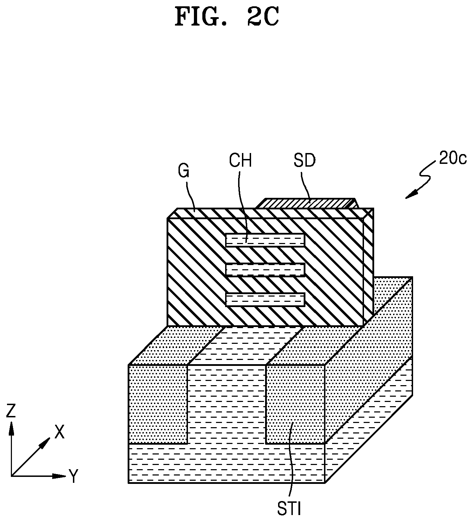

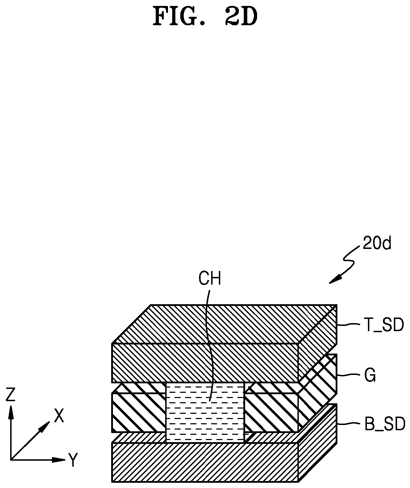

FIGS. 2A to 2D are diagrams illustrating examples of a device that can use power. For example, FIG. 2A shows a FinFET 20a, FIG. 2B shows a gate-all-around field effect transistor (GAAFET) 20b, FIG. 2C shows a multi-bridge channel field effect transistor (MBCFET) 20c, and FIG. 2D shows a vertical field effect transistor (VFET) 20d. For convenience of illustration, FIGS. 2A to 2C show a state where one of two source/drain regions is removed, and FIG. 2D shows a cross section of the VFET 20d taken along a plane parallel to a plane including the Y-axis and the Z-axis and passing through a channel CH of the VFET 20d.

Referring to FIG. 2A, the FinFET 20a may be formed by a fin-shaped active pattern extending in the Y-axis direction between shallow trench isolations STI and a gate G extending in the Y-axis direction. The source/drain SD may be formed at opposite sides of the gate G, respectively, and thus, the source and the drain may be spaced apart from each other in the X-axis direction. An insulating film may be formed between the channel CH and the gate G. In some implementations, the FinFET 20a may be formed by a plurality of active patterns spaced apart from each other in the Y-axis direction, and the gate G.

Referring to FIG. 2B, the GAAFET 20b may be formed by active patterns spaced apart from each other in the Z-axis direction and extending in the X-axis direction, e.g., nanowires, and the gate G extending in the Y-axis direction. The source/drain SD may be formed at opposite sides of the gate G, respectively, and thus, the source and the drain may be spaced apart from each other in the X-axis direction. An insulating film may be formed between the channel CH and the gate G. However, the number of nanowires included in the GAAFET 20b is not limited to that shown in FIG. 2B.

Referring to FIG. 2C, the MBCFET 20c may be formed by active patterns spaced apart from each other in the Z-axis direction and extending in the X-axis direction, e.g., nanosheets, and the gate G extending in the Y-axis direction. The source/drain SD may be formed at opposite sides of the gate G, respectively, and thus, the source and the drain may be spaced apart from each other in the X-axis direction. An insulating film may be formed between the channel CH and the gate G. However, the number of nanosheets included in the MBCFET 20c is not limited to that shown in FIG. 2C.

Referring to FIG. 2D, the VFET 20d may include a top source/drain T_SD and a bottom source/drain B_SD, which are spaced apart from each other in the Z-axis direction with the channel CH between the top source/drain T_SD and the bottom source/drain B_SD. The VFET 20d may include the gate G surrounding the perimeter of the channel CH between the top source/drain T_SD and the bottom source/drain B_SD. An insulating film may be formed between the channel CH and the gate G.

Below, an integrated circuit including the FinFET 20a or the MBCFET 20c is mainly described. However, the devices included in the integrated circuits described herein are not limited to the examples of FIGS. 2A to 2D or to any particular devices, and it will be understood that other devices are also within the scope of this disclosure. For example, the integrated circuit may include a ForkFET in which an N-type transistor and a P-type transistor are closer to each other by separating nanosheets for the P-type transistor and nanosheets for N-type transistor by a dielectric wall. In addition, the integrated circuit may include a bipolar junction transistor and/or a FET, such as a complementary field effect transistor (CFET), a negative capacitance field effect transistor (NCFET), or a carbon nanotube (CNT) FET.

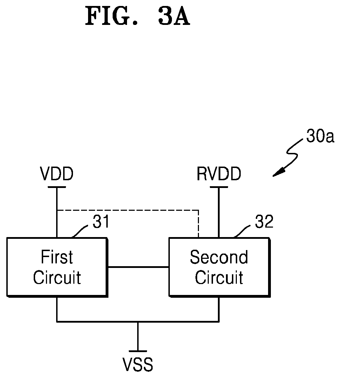

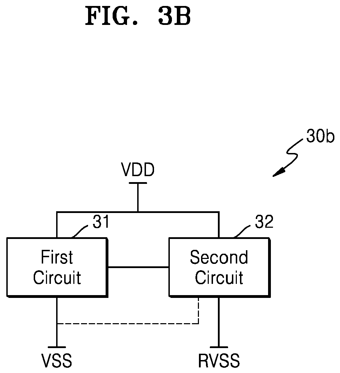

FIGS. 3A and 3B are block diagrams illustrating examples of integrated circuits. For example, the block diagrams of FIGS. 3A and 3B show integrated circuits 30a and 30b using multiple supply voltages. As shown in FIGS. 3A and 3B, each of the integrated circuits 30a and 30b may include a first circuit 31 and a second circuit 32, and each of the first circuit 31 and the second circuit 32 may include devices, for example, transistors. In the descriptions of FIGS. 3A and 3B, redundant descriptions are omitted.

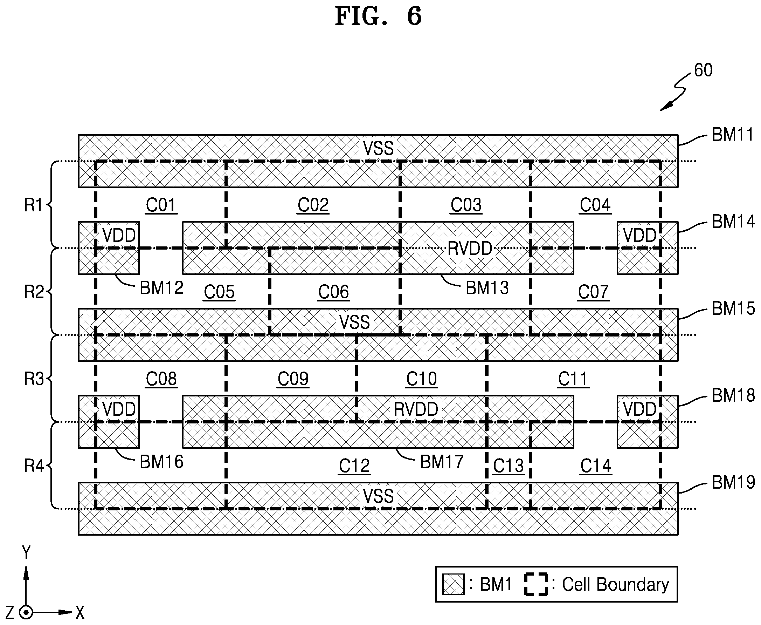

The integrated circuit may include cells. A cell is a unit of layout included in an integrated circuit and may be referred to as a standard cell. The cell may include a transistor and may be designed to perform predefined function(s). In an integrated circuit, cells may be arranged in rows. For example, cells may be arranged in a plurality of rows which extend in the first direction. A cell arranged in one row (e.g., C01 of FIG. 6) may be referred to as a single height cell, and a cell arranged in two or more consecutive rows (e.g., C03 of FIG. 6) may be referred to as a multi-height cell.

Referring to FIG. 3A, the first circuit 31 may operate based on power provided from a positive supply voltage VDD and a negative supply voltage VSS. For example, the first circuit 31 may include first cells, and the first cells may receive the positive supply voltage VDD and the negative supply voltage VSS, and may operate based on power provided from the positive supply voltage VDD and the negative supply voltage VSS. The second circuit 32 may operate based on power provided from a positive source supply voltage RVDD and the negative supply voltage VSS. For example, the second circuit 32 may include second cells, and the second cells may operate based on power provided from the positive source supply voltage RVDD and the negative supply voltage VSS. As indicated by a dashed line in FIG. 3A, in some implementations, the second circuit 32 may receive the positive supply voltage VDD, and at least one of the second cells may receive the positive supply voltage VDD, the positive source supply voltage RVDD, and the negative supply voltage VSS.

In some implementations, the positive supply voltage VDD may be generated from the positive source supply voltage RVDD. For example, the integrated circuit 30a may include a power gating cell, and the power gating cell may selectively generate the positive supply voltage VDD from the positive source supply voltage RVDD according to a control signal (e.g., a power-down signal). For instance, when a power-down signal is received, the power gating cell may block (e.g. disconnect or stop supplying or generating) the positive supply voltage VDD. When the positive supply voltage VDD is blocked (e.g. disconnected or not supplied) by the power gating cell, the first cells may not operate, whereas the second cells may operate normally. For example, the second cells (e.g. each of the second cells) may include an always-on circuit (otherwise known as a non-gated circuit or continuously powered circuit) which operates irrespective of power gating, and the second cells including the always-on circuit may be referred to as always-on cells (non-gated cells or continuously powered cells). For example, the second cells may include an always-on buffer, an always-on inverter, or the like. The always-on circuit may include at least one device which receives the positive source supply voltage RVDD.

In some implementations, the positive supply voltage VDD and the positive source supply voltage RVDD may have different levels and may be independent of each other. For example, the first cells may process signals having levels based on the positive supply voltage VDD, and the second cells may process signals having levels based on the positive source supply voltage RVDD. At least one of the second cells may include a level shifter which receives the positive supply voltage VDD and the positive source supply voltage RVDD, and the level shifter may interconvert signals having a level based on the positive supply voltage VDD and signals having a level based on the positive source supply voltage RVDD. The level shifter may include at least one device which receives the positive source supply voltage RVDD.

Referring to FIG. 3B, the first circuit 31 may operate based on power provided from a positive supply voltage VDD and a negative supply voltage VSS. For example, the first circuit 31 may include first cells, and the first cells may receive the positive supply voltage VDD and the negative supply voltage VSS, and may operate based on power provided from the positive supply voltage VDD and the negative supply voltage VSS. The second circuit 32 may operate based on power provided from the positive supply voltage VDD and a negative source supply voltage RVSS. For example, the second circuit 32 may include second cells, and the second cells may operate based on power provided from the positive supply voltage VDD and the negative source supply voltage RVSS. As indicated by a dashed line in FIG. 3B, in some implementations, the second circuit 32 may receive the negative supply voltage VSS, and at least one of the second cells may receive the positive supply voltage VDD, the negative supply voltage VSS, and the negative source supply voltage RVSS.

Examples discussed below are described mainly with reference to the integrated circuit 30a of FIG. 3A using the positive supply voltage VDD, the positive source supply voltage RVDD, and the negative supply voltage VSS. However, it is noted that the provided description is equally applicable to the integrated circuit 30b of FIG. 3B using the positive supply voltage VDD, the negative supply voltage VSS, and the negative source supply voltage RVSS. In addition, the positive source supply voltage RVDD may simply be referred to as a source supply voltage RVDD.

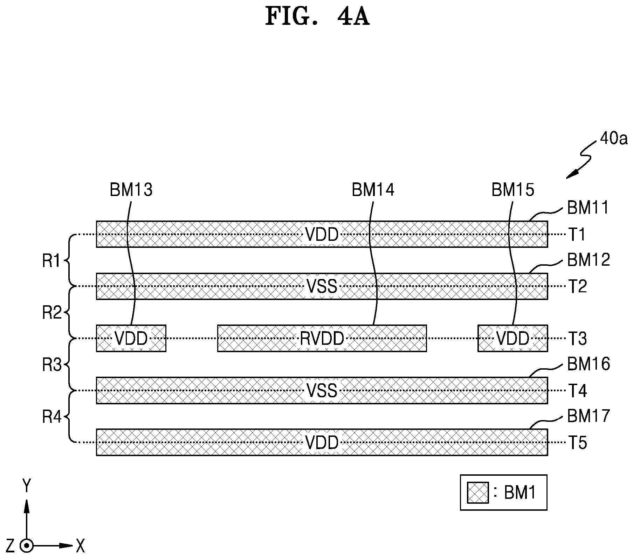

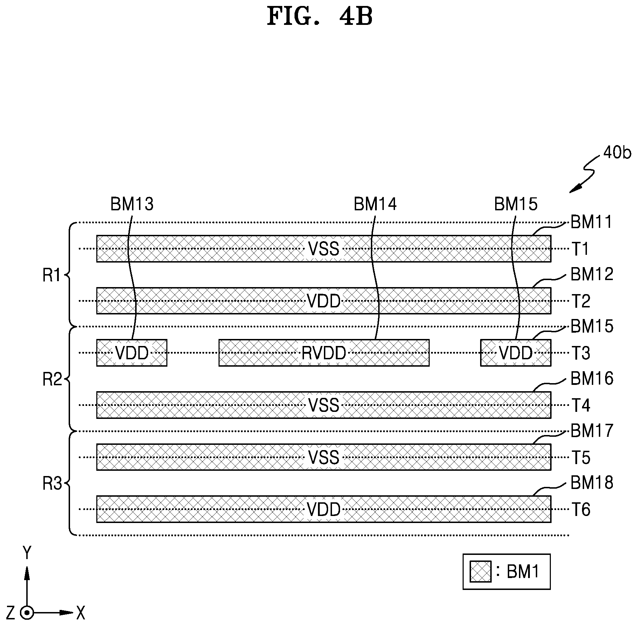

FIGS. 4A and 4B are diagrams illustrating examples of layouts of an integrated circuit. For example, FIG. 4A shows a layout 40a of an integrated circuit in which a pitch of the backside patterns corresponds to a height of a row of cells, and FIG. 4B shows a layout 40b of an integrated circuit in which the pitch of the backside patterns corresponds to half the height of the row of cells. As described above, patterns of the first backside wiring layer BM1 may be used to provide the positive supply voltage VDD, the negative supply voltage VSS, and the source supply voltage RVDD to the devices. Below, in the descriptions of FIGS. 4A and 4B, redundant descriptions are omitted.

Referring to FIG. 4A, the layout 40a may include first to seventh backside patterns BM11 to BM17, which extend in the X-axis direction along first to fifth tracks T1 to T5 extending in the X-axis direction in the first backside wiring layer BM1. Each track may be an axis along which one or more backside patterns are arranged. The first to fifth tracks T1 to T5 may correspond to boundaries of first to fourth rows R1 to R4 in which cells are arranged, and accordingly, a distance between adjacent tracks, i.e., the pitch of the backside patterns, may correspond to the height of the rows. As shown in FIG. 4A, the positive supply voltage VDD may be applied to the first backside pattern BM11 and the seventh backside pattern BM17, and the negative supply voltage VSS may be applied to the second backside pattern BM12 and the sixth backside pattern BM16. In some implementations, PFETs of the cells may be arranged adjacent to the backside patterns to which the positive supply voltage VDD is applied, and NFETs of the cells may be arranged adjacent to the backside patterns to which the negative supply voltage VSS is applied.

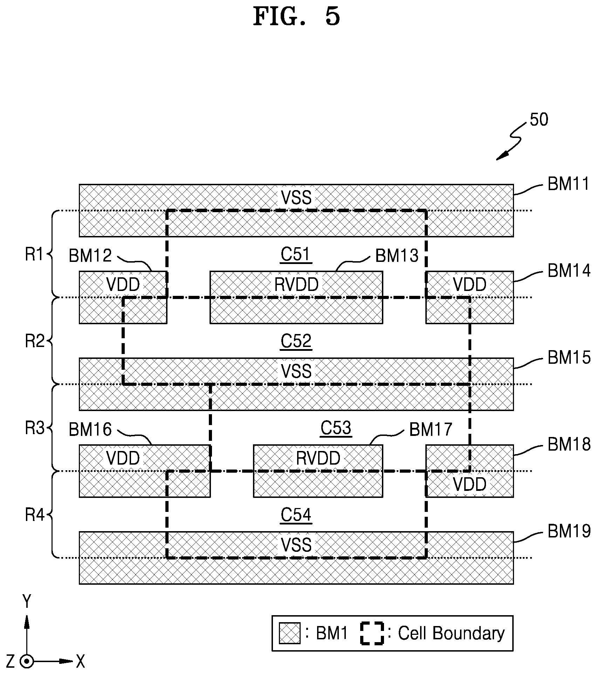

The positive supply voltage VDD may be applied to the third backside pattern BM13 and the fifth backside pattern BM15 which extend along the third track T3, while the source supply voltage RVDD may be applied to the fourth backside pattern BM14 extending along the third track T3 between the third backside pattern BM13 and the fifth backside pattern BM15. As shown in FIG. 4A, the fourth backside pattern BM14 may be spaced in the X-axis direction apart from the third backside pattern BM13 and the fifth backside pattern BM15 to which the positive supply voltage VDD is applied. As described below with reference to FIG. 5, the fourth backside pattern BM14 may vertically overlap at least one cell receiving the source supply voltage RVDD. Herein, a cell which vertically overlaps a backside pattern to which the source supply voltage RVDD is applied may be referred to as a source power cell, and a cell which does not vertically overlap a backside pattern to which the source supply voltage RVDD is applied may be referred to as a normal power cell. A source power cell may be otherwise known as a continuous or non-gated power cell. A normal power cell may be otherwise known as a gated power cell. Below, examples of cells arranged above backside patterns having a pitch corresponding to the height of a row are described with reference to FIGS. 5 and 6. In some implementations, due to the fourth backside pattern BM14 arranged as shown in FIG. 4A, the influence on backside patterns to which the positive supply voltage VDD or the negative supply voltage VSS is applied may be reduced or minimized.

Referring to FIG. 4B, the layout 40b may include first to eighth backside patterns BM11 to BM18, which extend along first to sixth tracks extending in the X-axis direction in the first backside wiring layer BM1. In some implementations, a distance between tracks of the first backside wiring layer BM1 may be less than the height of a row. For example, as shown in FIG. 4B, the distance between tracks in the first backside wiring layer BM1 (i.e., the pitch of the backside patterns) may correspond to half the height of the row. As shown in FIG. 4B, the negative supply voltage VSS may be applied to the first backside pattern BM11, the sixth backside pattern BM16, and the seventh backside pattern BM17, and the positive supply voltage VDD may be applied to the second backside pattern BM12 and the eighth backside pattern BM18. In some implementations, PFETs of the cells may vertically overlap the backside patterns to which the positive supply voltage VDD is applied, and NFETs of the cells may vertically overlap the backside patterns to which the negative supply voltage VSS is applied.

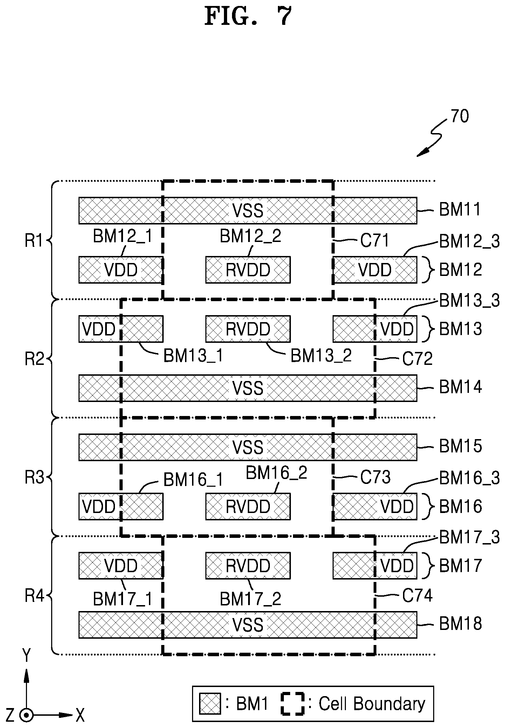

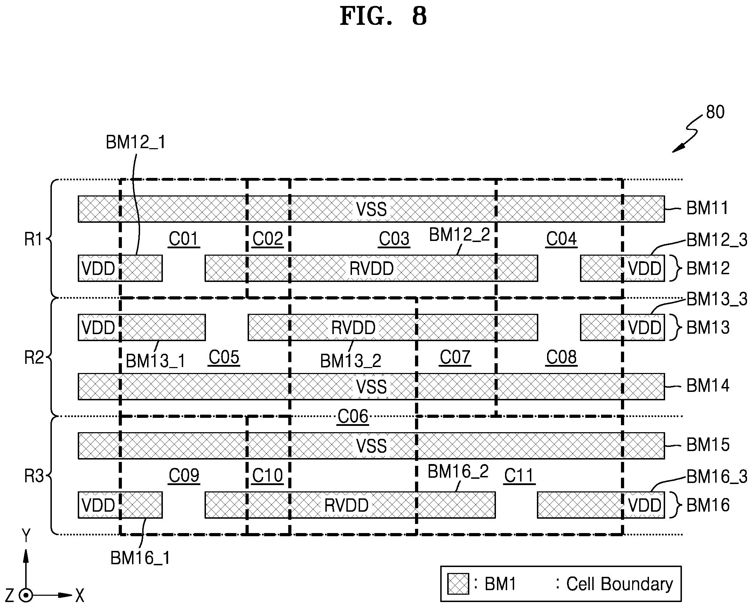

The positive supply voltage VDD may be applied to the third backside pattern BM13 and the fifth backside pattern BM15 which extend along the third track T3, while the source supply voltage RVDD may be applied to the fourth backside pattern BM14 extending along the third track T3 between the third backside pattern BM13 and the fifth backside pattern BM15. As shown in FIG. 4B, the fourth backside pattern BM14 may be spaced in the X-axis direction apart from the third backside pattern BM13 and the fifth backside pattern BM15 to which the positive supply voltage VDD is applied. As described below with reference to FIG. 7, the fourth backside pattern BM14 may vertically overlap at least one source power cell receiving the source supply voltage RVDD. Below, examples of cells arranged above backside patterns having a pitch corresponding to half the height of a row are described with reference to FIGS. 7 and 8.

FIG. 5 is a diagram illustrating a layout 50 of an integrated circuit. For example, FIG. 5 shows the layout 50 of an integrated circuit including backside patterns extending at a pitch corresponding to the height of a row. In the descriptions of FIG. 5, descriptions which overlap those of the drawings provided above are omitted.

As described above with reference to FIGS. 4A and 4B, the backside pattern to which the source supply voltage RVDD is applied may vertically overlap at least one cell, e.g., at least one source power cell. The source power cell may have a structure dependent on the backside pattern. For example, as described above with reference to FIGS. 1A and 1B, vias and/or contacts may be arranged on the backside pattern, and devices of the cell may be arranged along the vias and/or contacts. Referring to FIG. 5, the layout 50 may include the first to fourth cells C51 to C54 in the first to fourth rows R1 to R4, and the first to fourth cells C51 to C54 may be source power cells. In addition, the layout 50 may include first to ninth backside patterns BM11 to BM19 extending in the X-axis direction. The first cell C51 and the second cell C52 may vertically overlap the third backside pattern BM13, and the third cell C53 and the fourth cell C54 may vertically overlap the seventh backside pattern BM17.

A shown in FIG. 5, the first, fifth and ninth backside patterns BM11, BM15 and BM19 may receive the negative supply voltage VSS. The second, fourth, sixth and eighth backside patterns BM12, BM14, BM16 and BM18 may receive the positive supply voltage VDD. The third and seventh backside patterns BM13 and BM17 may receive the source supply voltage RVDD. The third backside pattern BM13 may be spaced in the X-axis direction apart from the second backside pattern BM12 and the fourth backside pattern BM14 to which the positive supply voltage VDD is applied. The seventh backside pattern BM17 may be spaced in the X-axis direction apart from the sixth backside pattern BM16 and the eight backside pattern BM18 to which the positive supply voltage VDD is applied.

In some implementations, a source power cell may be a complete cell having a structure in which normal power cells are arranged adjacent to each other at opposite ends in the same row. In other words, a complete cell may be a source cell that is arranged adjacent to and between other normal power cells in the same row. In some implementations, the first cell C51, the second cell C52, the third cell C53 and the fourth cell C54 may each be a complete cell. For example, as shown in FIG. 5, the third backside pattern BM13 may extend in the X-axis direction at the boundaries where the first cell C51 and the second cell C52 meet. In addition, the seventh backside pattern BM17 may extend in the X-axis direction at the boundaries where the third cell C53 and the fourth cell C54 meet. The third backside pattern BM13 and the seventh backside pattern BM17 may be spaced apart from boundaries of a complete cell, and accordingly, a backside pattern to which the positive supply voltage VDD is applied may be arranged adjacent to the complete cell.

The first cell C51 may not vertically overlap the second backside pattern BM12 and the fourth backside pattern BM14, whereas the second cell C52 may vertically overlap the second backside pattern BM12 and the fourth backside pattern BM14. In addition, the third cell C53 may vertically overlap the eighth backside pattern BM18 which is on the right among the sixth backside pattern BM16 and the eighth backside pattern BM18, and the fourth cell C54 may vertically overlap the sixth backside pattern BM16 which is on the left among the sixth backside pattern BM16 and the eighth backside pattern BM18.

FIG. 6 is a diagram illustrating a layout 60 of an integrated circuit. For example, FIG. 6 shows the layout 60 of an integrated circuit including backside patterns extending at a pitch corresponding to the height of a row. In the descriptions of FIG. 6, descriptions which overlap those of the drawings provided above are omitted.

Referring to FIG. 6, the layout 60 may include the first to 14^{th} cells C01 to C14 in the first to fourth rows R1 to R4, and the first to 14^{th} cells C01 to C14 may be source power cells. In addition, the layout 60 may include the first to ninth backside patterns BM11 to BM19 extending in the X-axis direction. The first to seventh cells C01 to C07 may vertically overlap the third backside pattern BM13 to which the source supply voltage RVDD is applied, and the eighth to 14th cells C8 to C14 may vertically overlap the seventh backside pattern BM17 to which the source supply voltage RVDD is applied.

In some implementations, a source power cell may be a trunk cell having a structure in which other source power cells are arranged adjacent to each other at opposite ends in the same row. In other words, a trunk cell may be a source power cell that is arranged adjacent to and between other source power cells in the same row. The trunk cell may include one or more devices (e.g. one or more devices that operate based on the source supply voltage RVDD). For example, as shown in FIG. 6, each of the first backside pattern BM11 and the third backside pattern BM13 may extend in the X-axis direction across boundaries of the second cell C02 which extend parallel to each other in the Y-axis direction. Accordingly, other source power cells, for example, the first cell C01 and the third cell C03, may be arranged at opposite sides of the second cell C02, respectively, and the second cell C02 may be referred to as a trunk cell. Similarly, the third cell C03, the sixth cell C06, the ninth cell C09, the tenth cell C10, and the twelfth cell C12 of FIG. 6 may also be referred to as trunk cells.

In some implementations, the source power cell may be a border cell having a structure where, in the same row, another source power cell is arranged on one side and a normal power cell is arranged on the other side. In other words, a border cell may be a source power cell that is arranged adjacent to and between a normal power cell and another source power cell in the same row. A border cell may include at least one device that operates based on the source supply voltage RVDD. For example, as shown in FIG. 6, each of the second backside pattern BM12 and the third backside pattern BM13 may extend in the X-axis direction across only one of the boundaries of the fifth cell C05 which extend parallel to each other in the Y-axis direction, and may terminate at (e.g. beneath) the fifth cell C05. Accordingly, the sixth cell C06, which is a source power cell, may be arranged on the right side of the fifth cell C05, and the normal power cell may be arranged on the left side of the fifth cell C05. Similarly, the eleventh cell C11 of FIG. 6 may be referred to as a border cell, and the tenth cell C10, which is the source power cell, may be arranged on the left side of the eleventh cell C11 and the normal power cell may be arranged on the right side of the eleventh cell C11.

In some implementations, the source power cell may be a break cell having a structure where, in the same row, another source power cell is arranged on one side and a normal power cell is arranged on the other side. In other words, a break cell may be a source power cell that is arranged adjacent to and between a normal power cell and another source power cell in the same row. For example, as shown in FIG. 6, each of the second backside pattern BM12 and the third backside pattern BM13 may extend in the X-axis direction across only one of boundaries of the first cell C01 which extend parallel to each other in the Y-axis direction, and may terminate at the first cell C01. Accordingly, the second cell C02, which is a source power cell, may be arranged on the right side of the first cell C01, and the normal power cell may be arranged on the left side of the first cell C01. Unlike in a border cell including devices which operate based on the source supply voltage RVDD, a device may be omitted in the break cell. For example, the break cell may not include any devices. The devices may be excluded from the break cell. The devices may be arranged outside the break cell. In FIG. 6, the fourth cell C04, the seventh cell C07, the eighth cell C08, and the 14^{th} cell C14 may also be referred to as border cells.

In some implementations, the source power cell may be a filler cell inserted between two other source power cells in the same row. In other words, a filler cell may be a source power cell that is arranged adjacent to and between other source power cells in the same row. For example, as shown in FIG. 6, each of the seventh backside pattern BM17 and the ninth backside pattern BM19 may extend in the X-axis direction across boundaries of the 13^{th} cell C13 which extend parallel to each other in the Y-axis direction. Accordingly, other source power cells, e.g., the twelfth cell C12 and the 14^{th} cell C14, may be arranged at opposite sides of the 13^{th} cell C13, respectively. After the second cell C12 and the 14^{th} cell C14 are arranged, the 13^{th} cell C13 may be inserted to fill in a space between the second cell C12 and the 14^{th} cell C14. In some implementations, a device may be omitted in the filler cell. For example, the filler cell may not include any devices. The devices may be arranged outside the filler cell. The devices may be excluded from the filler cell.

In some implementations, the source power cell may be a multi-height cell arranged in two or more consecutive rows. For example, the third cell C03 as a trunk cell may be a multi-height cell consecutively arranged in the first row R1 and the second row R2. In addition, the eighth cell C08 as a border cell may be a multi-height cell consecutively arranged in the third row R3 and the fourth row R4, e.g., replacing the 16^{th} cell BM16. As shown in FIG. 6, the third cell C03 may vertically overlap the first backside pattern BM11 and the fifth backside pattern BM15 to which the negative supply voltage VSS is applied.

FIG. 7 is a diagram illustrating an example of a layout 70 of an integrated circuit. For example, FIG. 7 shows the layout 70 of an integrated circuit including backside patterns extending at a pitch corresponding to half the height of a row. In the descriptions of FIG. 7, descriptions which overlap those of the drawings provided above are omitted.

Referring to FIG. 7, the layout 70 may include first to fourth cells C71 to C74 in the first to fourth rows R1 to R4, and the first to fourth cells C71 to C74 may be source power cells. In addition, the layout 70 may include the first to eighth backside patterns BM11 to BM18 extending in the X-axis direction. The second backside pattern BM12 may include three backside patterns BM12_1 to BM12_3, the third backside pattern BM13 may include three backside patterns BM13_1 to BM13_3, the sixth backside pattern BM16 may include three backside patterns BM16_1 to BM16_3, and the seventh backside pattern BM17 may include three backside patterns BM17_1 to BM17_3. The first to fourth cells C71 to C74 may vertically overlap the four backside patterns BM12_2, BM13_2, BM16_2, and BM17_2 to which the source supply voltage RVDD is applied, respectively.

The first to fourth cells C71 to C74 may be complete cells. For example, as shown in FIG. 7, the first cell C71 may vertically overlap the backside pattern BM12_2 to which the source supply voltage RVDD is applied, but may not vertically overlap the backside patterns BM12_1 and BM12_3 to which the positive supply voltage VDD is applied. The second cell C72 may vertically overlap not only the backside pattern BM13_2 to which the source supply voltage RVDD is applied, but also the backside patterns BM13_1 and BM13_3 to which the positive supply voltage VDD is applied. The third cell C73 may vertically overlap the backside pattern BM16_2 to which the source supply voltage RVDD is applied and the backside pattern BM16_1 to which the positive supply voltage VDD is applied, and the fourth cell C74 may vertically overlap the backside pattern BM1 7_2 to which the source supply voltage RVDD is applied and the backside pattern BM17_3 to which the positive supply voltage VDD is applied.

FIG. 8 is a diagram illustrating an example of a layout 80 of an integrated circuit. For example, FIG. 8 shows the layout 80 of an integrated circuit including backside patterns extending at a pitch corresponding to half the height of a row. In the descriptions of FIG. 8, descriptions which overlap those of the drawings provided above are omitted.

Referring to FIG. 8, the layout 80 may include the first to eleventh cells C01 to C11 in the first to third rows R1 to R3, and the first to eleventh cells C01 to C11 may be source power cells. In addition, the layout 80 may include the first to sixth backside patterns BM11 to BM16 extending in the X-axis direction. The second backside pattern BM12 may include three backside patterns BM12_1 to BM12_3, the third backside pattern BM13 may include three backside patterns BM13_1 to BM13_3, and the sixth backside pattern BM16 may include three backside patterns BM16_1 to BM16_3. The backside pattern BM12_2 to which the source supply voltage RVDD is applied may vertically overlap the first to fourth cells C01 to C04 in the first row R1, the backside pattern BM13_2 to which the source supply voltage RVDD is applied may vertically overlap the fifth to eighth cells C05 to C08 in the second row R2, and the backside pattern BM16_2 to which the source supply voltage RVDD is applied may vertically overlap the sixth cell C06 and the ninth to eleventh cells C09 to C11 in the third row R3.

The third cell C03, the sixth cell C06, and the seventh cell C07 may be trunk cells, the fifth cell C05 and the eleventh cell C11 may be border cells, the first cell C01, the fourth cell C04, the eighth cell C08, and the ninth cell C09 may be break cells, and the second cell C02 and the tenth cell C10 may be filler cells. In addition, the sixth cell C06, which is a trunk cell, may be a multi-height cell.

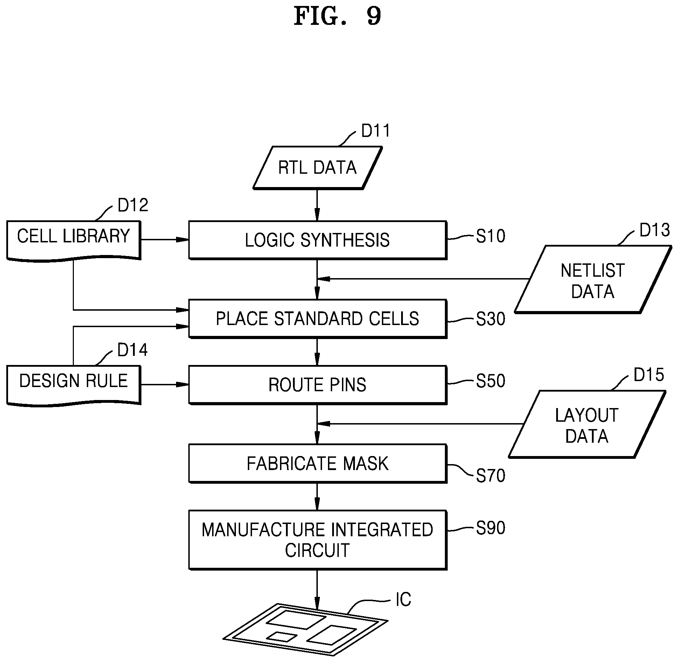

FIG. 9 is a flowchart of an example of a method of manufacturing an integrated circuit IC. For example, the flowchart of FIG. 9 shows an example of a method of manufacturing the integrated circuit IC including cells. As shown in FIG. 9, the method of manufacturing the integrated circuit IC may include a plurality of operations S10, S30, S50, S70, and S90.

A cell library (or a standard cell library) D12 may include information about cells, such as information about functions, characteristics, layout, or the like of cells. In some implementations, the cell library D12 may define normal power cells and source power cells. The normal power cells may receive the positive supply voltage VDD and the negative supply voltage VSS. The source power cells may receive the source supply voltage RVDD and the negative supply voltage VSS, and may further receive the positive supply voltage VDD. A design rule D14 may include requirements that the layout of the integrated circuit IC must adhere to. For example, the design rule D14 may include requirements for a space between patterns in the same layer, a minimum width of a pattern, a routing direction of a wiring layer, or the like. In some implementations, the design rule D14 may define a minimum width of an active pattern, a minimum separation distance between active patterns, or the like.

In operation S10, a logic synthesis operation for generating a netlist data D13 from register-transfer level (RTL) data D11 may be performed. For example, a semiconductor design tool (e.g., a logic synthesis tool) may perform logic synthesis by referencing the cell library D12 from the RTL data D11 written as a hardware description language (HDL), such as a very high speed integrated circuit (VHSIC) hardware description language (VHDL) and Verilog, thereby generating the netlist data D13 including a bitstream or netlist. The netlist data D13 may correspond to an input of place and routing described below. The netlist data D13 as used herein may be referred to as input data.

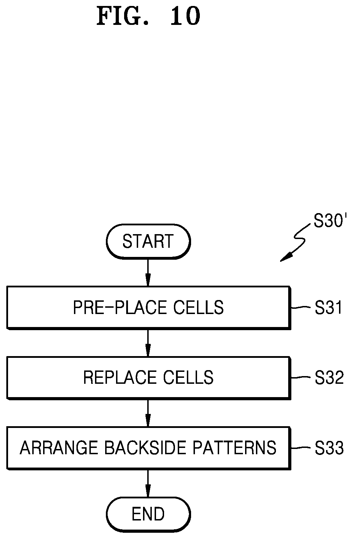

In operation S30, cells may be placed. For example, a semiconductor design tool (e.g., Place and Route (P&R) tool) may place cells used for the netlist data D13 by referencing the cell library D12 and the design rule D14. Arranging (or placing) cells may comprise defining relative positions and dimensions for the cells. In some implementations, the semiconductor design tool may place normal power cells and source power cells, and arrange backside patterns in the backside wiring layer. An example of operation S30 is described below with reference to FIG. 10.

In operation S50, pins of the cells may be routed. For example, the semiconductor design tool may generate interconnections electrically connecting output pins and input pins of arranged functional cells. In addition, in order to provide power to the functional cells, the semiconductor design tool may generate an interconnection connected to a node to which a positive supply voltage is applied or a node to which a negative supply voltage is applied. The interconnection may include vias in a via layer and/or patterns in a wiring layer. The semiconductor design tool may generate layout data D15 defining placed cells and generated interconnections. The layout data D15 may have a format, such as Graphic Design System II (GDSII) stream format, and may include geometric information of cells and interconnections. The semiconductor design tool may refer to the design rule D14 while routing the pins of cells. The layout data D15 may correspond to an output of place and routing. Operation S50 alone, or operations 30 and 50 collectively, may be referred to as a method of designing an integrated circuit.

In operation S70, an operation of fabricating a mask may be performed. For example, optical proximity correction (OPC) for correcting distortion phenomena, such as refraction caused by characteristics of light, in photolithography may be applied to the layout data D15. Patterns on a mask may be defined to form patterns arranged in a plurality of layers based on data to which OPC is applied, and at least one mask (or photomask) for forming patterns of each of the plurality of layers may be fabricated. In some implementations, the layout of the integrated circuit IC may be limitedly modified in operation S70, and the limited modification of the integrated circuit IC in operation S70 may be referred to as design polishing as a post-processing to optimize a structure of the integrated circuit IC.

In operation S90, an operation of manufacturing the integrated circuit IC may be performed. For example, the integrated circuit IC may be manufactured by patterning a plurality of layers using the at least one mask fabricated in operation S70. A front-end-of-line (FEOL) may include, for example, planarizing and cleaning a wafer, forming a trench, forming a well, forming a gate electrode, and forming a source and a drain. By FEOL, individual devices, such as transistors, capacitors, or resistors, may be formed on a substrate. In addition, back-end-of-line (BEOL) may include, for example, silicidating a gate, source and drain regions, adding a dielectric, planarizing, forming holes, adding a metal layer, forming a via, forming a passivation layer, or the like. By BEOL, individual devices, such as transistors, capacitors, or resistors, may be interconnected. In some implementations, middle-of-line (MOL) may be performed between FEOL and BEOL, and contacts may be formed on individual devices. Next, the integrated circuit IC may be packaged into a semiconductor package and used as a component in various applications.

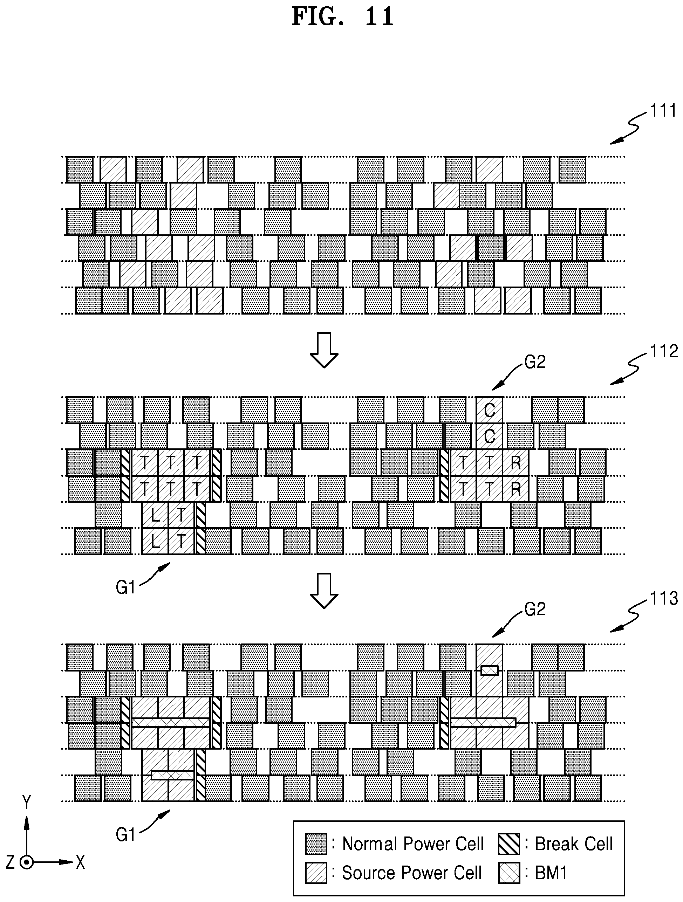

FIG. 10 is a flowchart of an example of a method of designing an integrated circuit, and FIG. 11 is a diagram illustrating an example of a layout of an integrated circuit. For example, the flowchart of FIG. 10 shows operation S30' which is an example of operation S30 of FIG. 9, and FIG. 11 shows layouts 111, 112, and 113 designed while operation S30' of FIG. 10 is performed. As described above with reference to FIG. 9, cells may be placed in operation S30' of FIG. 9.

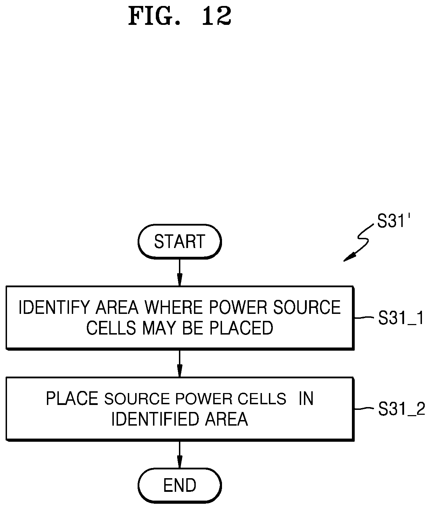

Referring to FIG. 10, operation S30' may include a plurality of operations S31, S32, and S33. In operation S31, cells may be pre-placed. For example, a semiconductor design tool may place normal power cells and source power cells in series of rows extending in the X-axis direction, thereby generating the layout 111 of FIG. 11. In some implementations, the source power cells may be placed based on predefined conditions. An example of operation S31 is described below with reference to FIG. 12.

In operation S32, the cells (e.g., at least one of the cells) may be replaced, cell(s) may be inserted, cell(s) may be moved, and/or the like. For example, the semiconductor design tool may replace the normal power cells and the source power cells in the layout 111 of FIG. 11, thereby generating the layout 112 of FIG. 11. In some implementations, the semiconductor design tool may replace the normal power cells and the source power cells such that the source power cells are grouped into at least one island. A backside pattern to which a source supply voltage is applied may be shared by source power cells included in the same island. For example, in the layout 112 of FIG. 11, the source power cells may be grouped into a first group G1 and a second group G2, and each of the first group G1 and the second group G2 may form an island including source power cells.

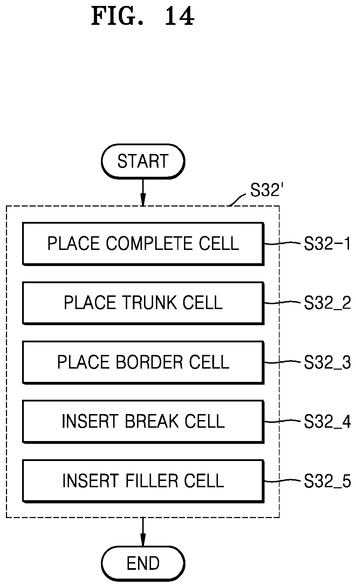

In some implementations, the semiconductor design tool may select and place a layout of source power cells based on a location of the source power cells on the island. For example, the cell library D12 of FIG. 9 may define two or more different layouts for source power cells which provide the same function. For example, the cell library D12 may define layouts corresponding to complete cells, trunk cells, and/or border cells for each function. For example, the cell library D12 may define layouts corresponding to complete cells, trunk cells, and border cells for the always-on buffer. The semiconductor design tool may place trunk cells on the interior of an island, as indicated by "T", border cells at the border of the island, as indicated by "L" and "R", and complete cells, as indicated by "C". In addition, the semiconductor design tool may insert a break cell between the border of the island (e.g. adjoining normal power cells) and the trunk cells. An example of operation S32 is described below with reference to FIG. 14.

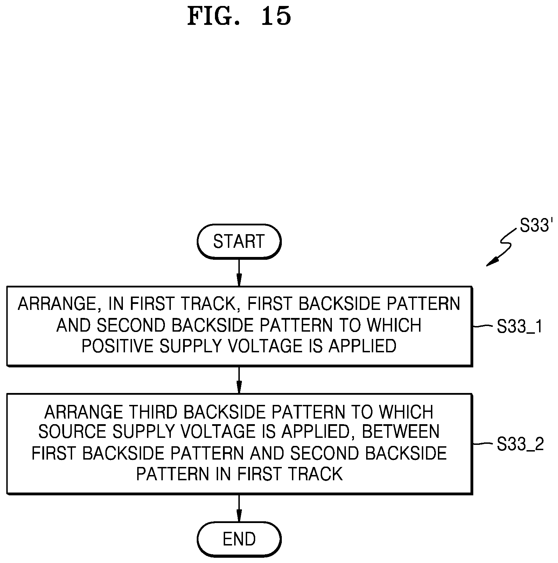

In operation S33, backside patterns may be arranged. For example, the semiconductor design tool may arrange the backside patterns based on the normal power cells and the source power cells placed in operation S32. The semiconductor design tool may generate the layout 113 by arranging patterns of the first backside wiring layer BM1 to which the source supply voltage RVDD is applied, based on the source power cells placed in the layout 112 of FIG. 11. Similar to the layout 113 of FIG. 11, the patterns of the first backside wiring layer BM1 to which the source supply voltage RVDD is applied may extend in the X-axis direction inside the islands corresponding to the first group G1 and the second group G2, and thus may not affect the normal power cells. An example of operation S33 is described below with reference to FIG. 15.

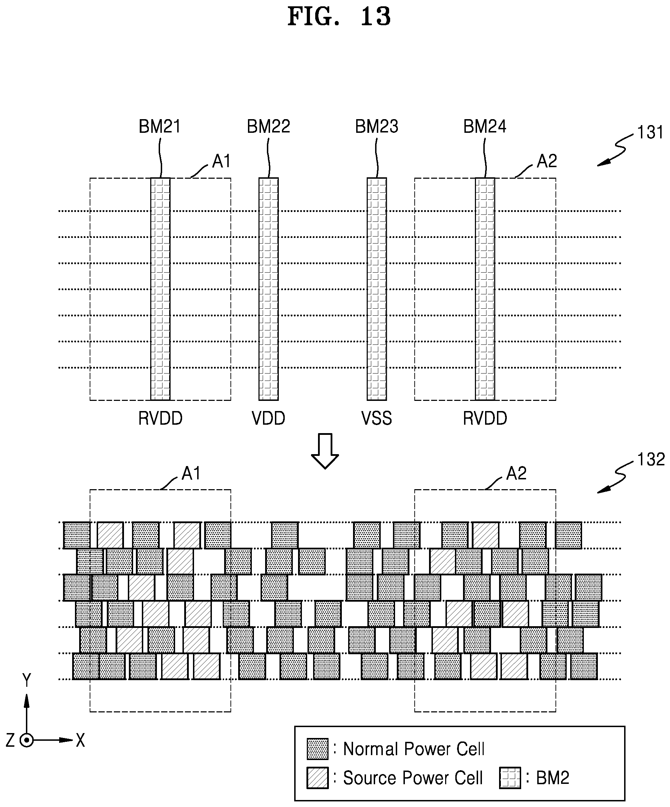

FIG. 12 is a flowchart of an example of a method of designing an integrated circuit, and FIG. 13 is a diagram illustrating an example of a layout of an integrated circuit. For example, the flowchart of FIG. 12 shows operation S31' which is an example of operation S31 of FIG. 10, and FIG. 13 shows layouts 131 and 132 designed while operation S31' of FIG. 12 is performed. As described above with reference to FIG. 10, cells may be pre-placed in operation S31' of FIG. 12.

Referring to FIG. 12, operation S31' may include operation S31_1 and operation S31_2. In operation S31_1, an area where source power cells may be placed may be identified. For example, the layout 131 of FIG. 13 may include first to fourth backside patterns BM21 to BM24 extending in the Y-axis direction from a second backside wiring layer BM2 which is under the first backside wiring layer BM1. As shown in FIG. 13, the source supply voltage RVDD may be applied to the first backside pattern BM21 and the fourth backside pattern BM24, the positive supply voltage VDD may be applied to the second backside pattern BM22, and the negative supply voltage VSS may be applied to the third backside pattern BM23. When the source supply voltage RVDD is applied from a backside pattern of the second backside wiring layer BM2 to a backside pattern of the first backside wiring layer BM1, it may be advantageous for the source power cells receiving the source supply voltage RVDD to be arranged close to the first backside pattern BM21 and the fourth backside pattern BM24, and accordingly, a first area A1 including the first backside pattern BM21 and a second area A2 including the fourth backside pattern BM24 may be defined.

In operation S31_2, the source power cells may be placed in the identified area. For example, a semiconductor design tool may place the source power cells in the area identified in operation S31_1. The semiconductor design tool may identify the first area A1 and the second area A2 in the layout 131 of FIG. 11, and place the source power cells in the first area A1 and the second area A2, thereby generating the layout 132. As described above with reference to FIGS. 10 and 11, the source power cells placed in the layout 132 may be replaced to be grouped into at least one island.

FIG. 14 is a flowchart of an example of a method of designing an integrated circuit. For example, the flowchart of FIG. 14 shows operate S32' which is an example of operation S32 of FIG. 10. As described above with reference to FIG. 10, cells may be replaced in operation S32' of FIG. 14. As shown in FIG. 14, operation S32' may include a plurality of operations S32_1 to S32_5. In some implementations, the plurality of operations S32_1 to S32_5 may be performed in an arbitrary order (e.g., a random order), and/or two or more operations may be performed in parallel.

In operation S32_1, a complete cell may be placed. The complete cell may touch borders of an island extending in the Y-axis direction. In operation S32_2, a trunk cell may be placed. The trunk cell may be placed inside the island and spaced apart from the border of the island. In operation S32_3, a border cell may be placed. The border cell may touch the border of an island extending in the Y-axis direction. In operation S32_4, a break cell may be inserted. The break cell may be inserted between the border of the island extending in the Y-axis direction and the trunk cell. In operation S32_5, a filler cell may be inserted. The filler cell may be inserted between source power cells inside the island.

FIG. 15 is a flowchart of an example of a method of designing an integrated circuit. For example, the flowchart of FIG. 15 shows operation S33' which is an example of operation S33 of FIG. 10. As described above with reference to FIG. 10, backside patterns may be rearranged in operation S33' of FIG. 15. As shown in FIG. 15, operation S33' may include operations S33_1 and S33_2.

In operation S33_1, a first backside pattern and a second backside pattern to which the positive supply voltage VDD is applied may be arranged in a first track. For example, a semiconductor design tool may arrange the first backside pattern and the second backside pattern which extend along the first track which extends in the X-axis from the first backside wiring layer BM1. The first backside pattern and/or the second backside pattern may vertically overlap normal power cell(s), and may or may not vertically overlap source power cell(s).

In operation S33_2, a third backside pattern to which the source supply voltage RVDD is applied may be arranged between the first backside pattern and the second backside pattern in the first track. For example, the semiconductor design tool may arrange the third backside pattern extending in the X-axis direction along the first track, between the first backside pattern and the second backside pattern arranged in operation S33_1. The third backside pattern may vertically overlap source power cell(s), but may not vertically overlap with normal power cell(s).

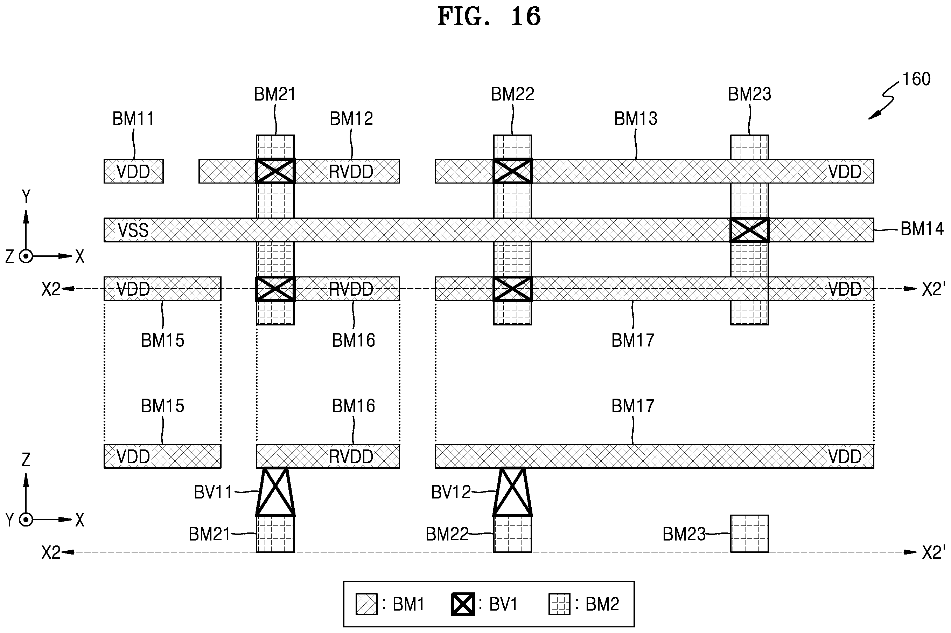

FIG. 16 is a diagram illustrating a layout 160 of an example of an integrated circuit. FIG. 16 shows a plan view of the layout 160 and a cross-sectional view of the layout 160 taken along line X2-X2'. As described above with reference to FIG. 13, backside patterns to which a supply voltage is applied may extend in the Y-axis direction in the second backside wiring layer BM2 which is under the first backside wiring layer BM1, and the backside patterns of the first backside wiring layer BM1 may receive the supply voltage from the backside patterns of the second backside wiring layer BM2.

Referring to FIG. 16, the backside patterns BM21 to BM23 may extend in parallel in the Y-axis direction in the second backside wiring layer BM2 and receive the source supply voltage RVDD, the positive supply voltage VDD, and the negative supply voltage VSS, respectively. In addition, the backside patterns BM11 to BM17 may extend in the X-axis direction in the first backside wiring layer BM1 which is above the second backside wiring layer BM2.

The backside patterns BM12 and BM16 of the first backside wiring layer BM1 may receive the source supply voltage RVDD from the backside pattern BM21 of the second backside wiring layer BM2 through vias of a first backside via layer BV1. For example, as shown in FIG. 16, a first backside via BV11 may be arranged between the backside pattern BM16 of the first backside wiring layer BM1 and the backside pattern BM21 of the second backside wiring layer BM2. The backside patterns BM13 and BM17 of the first backside wiring layer BM1 may receive the positive supply voltage VDD from the backside pattern BM22 of the second backside wiring layer BM2 through vias of the first backside via layer BV1. For example, as shown in FIG. 16, a second backside via BV12 may be arranged between the backside pattern BM17 of the first backside wiring layer BM1 and the backside pattern BM22 of the second backside wiring layer BM2. The backside pattern BM14 of the first backside wiring layer BM1 may receive the negative supply voltage VSS from the backside pattern BM23 of the second backside wiring layer BM2 through one or more vias of the first backside via layer BV1.

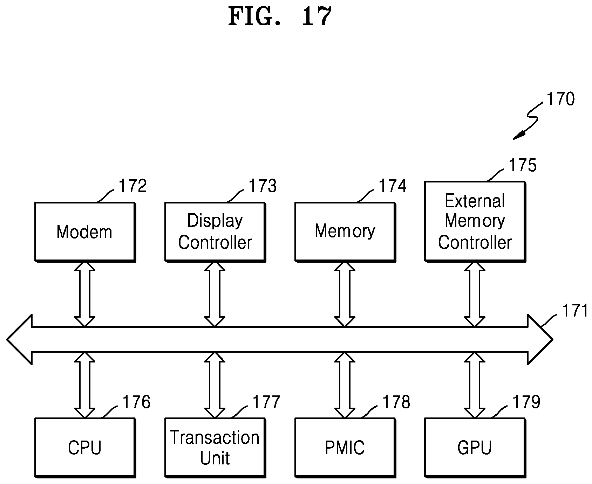

FIG. 17 is a block diagram illustrating an example of a system-on-chip (SoC) 170. The SoC 170 is a semiconductor device and may include an integrated circuit as described with respect to FIGS. 1 to 16. The SoC 170 may be a device that implements complex blocks, such as intellectual property (IP) for performing various functions, in a single chip. The SoC 170 may be designed by a method of designing an integrated circuit (e.g., a method as described with respect to FIGS. 9 to 15) and thus, the SoC 170 may provide a highly reliable power delivery network. Referring to FIG. 17, the SoC 170 may include a modem 172, a display controller 173, a memory 174, an external memory controller 175, a central processing unit (CPU) 176, a transaction unit 177, a power management integrated circuit (PMIC) 178, and a graphics processing unit (GPU) 179, and each of the functional blocks of the SoC 170 may communicate with each other through a system bus 171.

The CPU 176, which is capable of controlling the operation of the SoC 170 at the highest level, may control operations of the other functional blocks 172 to 179. The modem 172 may demodulate a signal received from the outside of the SoC 170 or modulate a signal generated inside the SoC 170 and transmit the modulated signal to the outside. The external memory controller 175 may control an operation of transmitting and receiving data to and from an external memory device connected to the SoC 170. For example, programs and/or data stored in the external memory device may be provided to the CPU 176 or the GPU 179 under the control by the external memory controller 175. The GPU 179 may execute program instructions related to graphics processing. The GPU 179 may receive graphics data through the external memory controller 175 or transmit graphics data processed by the GPU 179 to the outside of the SoC 170 through the external memory controller 175. The transaction unit 177 may monitor data transactions of each of the functional blocks, and the PMIC 178 may control power supplied to each of the functional blocks under the control by the transaction unit 177. The display controller 173 may control a display (or a display device) outside the SoC 170 to transmit data generated inside the SoC 170 to the display. The memory 174 may include non-volatile memory, such as electrically erasable programmable read-only memory (EEPROM) or flash memory, or may include volatile memory, such as dynamic random access memory (DRAM) or static random access memory (SRAM).

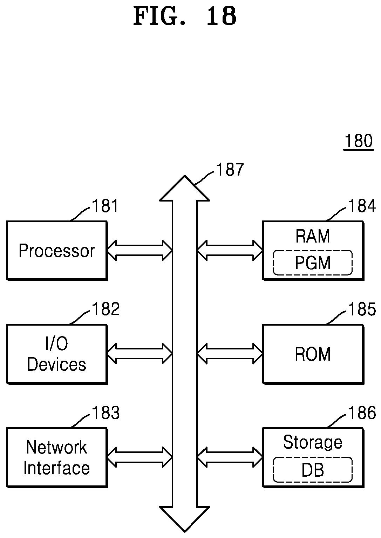

FIG 18 is a block diagram illustrating an example of a computing system 180 including a memory for storing programs. A method of designing an integrated circuit as described above, for example, any operations described with respect to FIGS. 9 to 15, may be performed in or by the computing system (or computer) 180.

The computing system 180 may be a stationary computing system, such as a desktop computer, a workstation, or a server, or may be a portable computing system, such as a laptop computer. As shown in FIG. 18, the computing system 180 may include a processor 181, input/output devices 182, a network interface 183, random access memory (RAM) 184, read only memory (ROM) 185, and a storage 186. The processor 181, the input/output devices 182, the network interface 183, the RAM 184, the ROM 185, and the storage 186 may be connected to a bus 187 and may communicate with one another through the bus 187.

The processor 181 may be referred to as a processing unit, and may include at least one core capable of executing arbitrary instruction sets (e.g., Intel Architecture-32 (IA-32), 64-bit extended IA-32, x86-64, PowerPC, Sparc, Microprocessor without Interlocked Pipeline Stages (MIPS), ARM, or IA-64), such as a micro-processor, an application processor (AP), a digital signal processor (DSP), or a GPU. For example, the processor 181 may access the memory, i.e., the RAM 184 or the ROM 185, through the bus 187, and execute instructions stored in the RAM 184 or the ROM 185.

The RAM 184 may store a program PGM or at least a portion thereof for a method of designing an integrated circuit, according to an embodiment, and the program PGM may cause the processor 181 to perform at least some of the operations included in the method of designing an integrated circuit, for example, the method of FIG. 9. In other words, the program PGM may include a plurality of instructions executable by the program PGM, and the plurality of instructions included in the program PGM may cause the processor 181 to perform, for example, at least some of the operations included in the flowcharts described above, e.g., as described with respect to FIGS. 9 to 15.

The storage 186 may not lose stored data even when power supplied to the computing system 180 is cut off. For example, the storage 186 may include a non-volatile memory device, or may include a storage medium, such as a magnetic tape, an optical disk, or a magnetic disk. In addition, the storage 186 may be removable from the computing system 180. The storage 186 may store the program PGM, and before the program PGM is executed by the processor 181, the program PGM or at least a portion thereof may be loaded from the storage 186 into the RAM 184. In some implementations, the storage 186 may store files written in a programming language, and the program PGM or at least a portion thereof generated by a compiler or the like from the file may be loaded into the RAM 184. In addition, as shown in FIG. 18, the storage 186 may store a database DB, and the database DB may include information necessary for designing an integrated circuit, such as information about designed blocks, the cell library D12 of FIG. 9, and/or the design rule D14 of FIG. 9.

The storage 186 may store data to be processed by the processor 181 or data which has been processed by the processor 181. In other words, the processor 181 may generate data by processing data stored in the storage 186 according to the processor 181, and store the generated data in the storage 186. For example, the storage 186 may store the RTL data D11, the netlist data D13, and/or the layout data D15 of FIG. 9.

The input/output devices 182 may include an input device, such as a keyboard or a pointing device, or may include an output device, such as a display device or a printer. For example, a user may trigger execution of the program PGM by the processor 181 through the input/output devices 182, input the RTL data D11 and/or the netlist data D13 of FIG. 9, or identify the layout data D15 of FIG. 9.

The network interface 183 may provide access to a network outside the computing system 180. For example, the network may include a plurality of computing systems and communication links, and the communication links may include wired links, optical links, wireless links, or any other form of links.

Methods described herein include methods for designing an integrated circuit. These methods may generate a design of an integrated circuit and may generate (e.g. output) computer executable instructions for controlling one or more manufacturing devices to manufacture the integrated circuit according to the design. Following the design of the integrated circuit, the integrated circuit may be manufactured according to the design.

While this disclosure contains many specific implementation details, these should not be construed as limitations on the scope of what may be claimed. Certain features that are described in this disclosure in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations, one or more features from a combination can in some cases be excised from the combination, and the combination may be directed to a subcombination or variation of a subcombination.

Embodiments are set out in the following Clauses:
Clause 1. An integrated circuit, the integrated circuit comprising:
   a first cell comprising at least one device arranged on a front side of a substrate, wherein the first cell is configured to receive a first supply voltage and a second supply voltage;
   a second cell comprising at least one device arranged on the front side of the substrate, wherein the second cell is configured to receive a source supply voltage and the second supply voltage;
   a first backside pattern and a second backside pattern, wherein the first backside pattern and the second backside pattern extend in a first direction along a first track in a first backside wiring layer, wherein the first backside wiring layer is on a back side of the substrate, and wherein the first backside pattern and the second backside pattern are configured to receive the first supply voltage; and
   a third backside pattern extending in the first direction along the first track between the first backside pattern and the second backside pattern, in the first backside wiring layer,
   wherein the third backside pattern is configured to receive the source supply voltage.
Clause 2. The integrated circuit of Clause 1, wherein the second cell comprises a complete cell that vertically overlaps the third backside pattern,
   wherein the third backside pattern extends in the first direction between boundaries extending in parallel in a second direction that is perpendicular to the first direction.
Clause 3. The integrated circuit of Clause 2, wherein at least one of the first backside pattern or the second backside pattern vertically overlaps the complete cell.
Clause 4. The integrated circuit of Clause 1, wherein the second cell comprises a trunk cell that vertically overlaps the third backside pattern,
   wherein the third backside pattern extends and crosses, in the first direction, boundaries extending in parallel in a second direction that is perpendicular to the first direction.
Clause 5. The integrated circuit of Clause 1, wherein the second cell comprises a border cell that vertically overlaps the third backside pattern,
   wherein the third backside pattern extends and crosses, in the first direction, one of boundaries extending in parallel in a second direction that is perpendicular to the first direction, and terminates between the boundaries, and
   wherein at least one of the first backside pattern or the second backside pattern vertically overlaps the border cell.
Clause 6. The integrated circuit of any of Clauses 1 4 or 5, comprising a third cell that vertically overlaps the third backside pattern,
   wherein all devices on the front side of the substrate are arranged outside the third cell.
Clause 7. The integrated circuit of Clause 6, wherein the third cell comprises a break cell in which the third backside pattern extends and crosses, in the first direction, one of boundaries extending in parallel in a second direction that is perpendicular to the first direction, and terminates between the boundaries, and
   wherein at least one of the first backside pattern or the second backside pattern vertically overlaps the break cell.
Clause 8. The integrated circuit of Clause 6, wherein the third cell comprises a filler cell in which the third backside pattern extends and crosses, in the first direction, boundaries extending parallel in a second direction that is perpendicular to the first direction.

While certain examples have been particularly shown and described, it will be understood that various changes in form and details may be made therein without departing from the scope of this disclosure.

## Claims

1. An integrated circuit comprising:
a plurality of devices arranged on a front side of a substrate (SUB);
a first backside pattern (BM12) and a second backside pattern (BM14), wherein the first backside pattern (BM12) and the second backside pattern (BM14) extend in a first direction along a first track in a first backside wiring layer (BM1), wherein the first backside wiring layer (BM1) is on a back side of the substrate (SUB), and
wherein the first backside pattern (BM12) and the second backside pattern (BM14) are configured to receive a first supply voltage (VDD) and provide the first supply voltage (VDD) to at least one of the plurality of devices; and
a third backside pattern (BM13) extending in the first direction along the first track between the first backside pattern (BM12) and the second backside pattern (BM14), in the first backside wiring layer (BM1),
wherein the third backside pattern (BM13) is configured to receive a source supply voltage (RVDD) and provide the source supply voltage (RVDD) to a first device of the plurality of devices.

2. The integrated circuit of claim 1, comprising a fourth backside pattern (BM11) extending in the first direction along a second track that is adjacent to the first track, in the first backside wiring layer (BM1),
wherein the fourth backside pattern (BM11) is configured to receive a second supply voltage (VSS) and provide the second supply voltage (VSS) to at least one of the plurality of devices.

3. The integrated circuit of claim 2, wherein the third backside pattern (BM13) has a shorter length than the fourth backside pattern (BM11) in the first direction.

4. The integrated circuit of any preceding claim, wherein the plurality of devices comprise a second device configured to generate the first supply voltage (VDD) from the source supply voltage (RVDD) based on a control signal.

5. The integrated circuit of claim 4, wherein the plurality of devices comprise an always-on circuit that includes the first device,
wherein the always-on circuit is configured to operate based on the source supply voltage (RVDD) when the first supply voltage (VDD) is blocked by the second device.

6. The integrated circuit of any preceding claim, wherein the plurality of devices comprise a level shifter that includes the first device,
wherein the level shifter is configured to perform at least one of:
generating a second signal having a level based on the first supply voltage (VDD), from a first signal having a level based on the source supply voltage (RVDD), or
generating the first signal from the second signal.

7. The integrated circuit of any preceding claim, further comprising:
a fifth backside pattern (BM21) extending in a second direction that is perpendicular to the first direction, in a second backside wiring layer (BM2) that is under the first backside wiring layer (BM1),
wherein the fifth backside pattern (BM21) is configured to receive the source supply voltage (RVDD); and
at least one backside via extending between the third backside pattern (BM13) and the fifth backside pattern (BM21).

8. The integrated circuit of any preceding claim, the integrated circuit comprising:
a first cell comprising at least one device arranged on a front side of a substrate, wherein the first cell is configured to receive the first supply voltage (VDD) and a second supply voltage (VSS);
a second cell comprising at least one device arranged on the front side of the substrate, wherein the second cell is configured to receive the source supply voltage (RVDD) and the second supply voltage (VSS).

9. The integrated circuit of claim 8, wherein the second cell comprises a complete cell that vertically overlaps the third backside pattern (BM13),
wherein the third backside pattern (BM13) extends in the first direction between boundaries of the second cell extending in parallel in a second direction that is perpendicular to the first direction.

10. The integrated circuit of claim 9, wherein at least one of the first backside pattern (BM12) or the second backside pattern (BM14) vertically overlaps the complete cell.

11. The integrated circuit of claim 8, wherein the second cell comprises a trunk cell that vertically overlaps the third backside pattern (BM13),
wherein the third backside pattern (BM13) extends and crosses, in the first direction, boundaries of the second cell extending in parallel in a second direction that is perpendicular to the first direction.

12. The integrated circuit of claim 8, wherein the second cell comprises a border cell that vertically overlaps the third backside pattern (BM13),
wherein the third backside pattern (BM13) extends and crosses, in the first direction, one of boundaries of the second cell extending in parallel in a second direction that is perpendicular to the first direction, and terminates between the boundaries of the second cell, and
wherein at least one of the first backside pattern (BM12) or the second backside pattern (BM14) vertically overlaps the border cell.

13. The integrated circuit of any of claims 8, 11 or 12, comprising a third cell that vertically overlaps the third backside pattern (BM13),
wherein all devices on the front side of the substrate are arranged outside the third cell.

14. The integrated circuit of claim 13, wherein the third cell comprises a break cell in which the third backside pattern (BM13) extends and crosses, in the first direction, one of boundaries of the third cell extending in parallel in a second direction that is perpendicular to the first direction, and terminates between the boundaries of the third cell, and
wherein at least one of the first backside pattern (BM12) or the second backside pattern (BM14) vertically overlaps the break cell.

15. The integrated circuit of claim 13, wherein the third cell comprises a filler cell in which the third backside pattern (BM13) extends and crosses, in the first direction, boundaries of the third cell extending parallel in a second direction that is perpendicular to the first direction.
